# EUROPEAN PATENT SPECIFICATION

(11) **EP 2 230 705 B1**
(45) Date of publication and mention of the grant of the patent: **30.10.2013**
(21) Application number: 10153141.6
(22) Date of filing: 10.02.2010
(51) Int. Cl.: H01M 2/20, H01M 2/30

(54) **Battery module**
Batteriemodul
Module de batterie

(30) Priority: 16.03.2009 US 160604 P; 24.11.2009 US 625519
(43) Date of publication of application: 22.09.2010
(73) Proprietor: Samsung SDI Co., Ltd., Gyeonggi-do (KR); Robert Bosch GmbH, 70442 Stuttgart (DE)
(72) Inventor: Kim, Yong-Sam, Gyeonggi-do (KR)
(74) Representative: Gulde Hengelhaupt Ziebig & Schneider

(56) References cited:
- JP-A- 2003 249 207
- US-A- 3 663 927
- US-A1- 2006 094 289

## Description

### Field of the Invention

The present invention relates to a battery module, and more particularly, to a battery module with an improved connection member.

### Description of the Related Art

A rechargeable battery can be repeatedly charged and discharged unlike a primary battery which cannot be recharged. A low-capacity rechargeable battery is used for small electronic devices which are portable, such as mobile phones, laptop computer, and camcorders. A large-capacity battery is used as a power source for driving motors, such as hybrid vehicles.

In recent years, a high-power rechargeable battery using a non-aqueous electrolyte having a high energy density is being developed. The high-power rechargeable battery includes a battery module in which a plurality of rechargeable batteries is coupled in series so that the high-power rechargeable battery can be used to drive the motors of devices requiring high power, such as electric vehicles.

Further, a battery module generally includes a plurality of rechargeable batteries coupled in series (each hereinafter referred to as a 'unit battery,' for convenience of description), and each of the rechargeable batteries may have a cylindrical or square shape.

Each of the unit batteries includes a casing, having an electrode assembly placed with a separator intervened between a positive electrode and a negative electrode, and space where the electrode assembly is placed, a cap assembly configured to close and seal the casing, and electrode terminals electrically connected to the electrode assembly and configured to externally protrude through the cap assembly.

Furthermore, the positive and negative terminals of each of the unit batteries are arranged to cross the positive and negative terminals of a neighbor unit battery so that the unit batteries can be coupled to each other in series. Furthermore, a connection member is inserted between the positive terminal of a unit battery on one side and the negative terminal of a neighbor unit battery, and nuts placed over the connection member are engaged with the positive terminal and the negative terminal. Accordingly, the unit batteries are coupled in series via the connection member.

To this end, through holes into which the positive terminal and the negative terminal are inserted are formed in the connection member, and outer circumferential surfaces of the positive and negative terminals are processed to have a screw shape for engagement with the nuts.

This structure is however problematic in that high contact resistance is generated at a surface where the nuts come into contact with the connection member.

This problem is caused by a small contact area of the nuts and the connection member. That is, although the connection member and the nuts are processed to have a smooth surface externally, the surface is formed to have uneven portions because of limits to processing. Accordingly, when the contact portion of the nuts and the connection member is checked microscopically in the state where the nuts are engaged with the positive terminal and the negative terminal, the contact portion maintains a point contact state at a small area.

Accordingly, the existing battery module is problematic in that output power is low because of an increase in the contact resistance for the contact portion of the unit battery and resistance heat is generated at the contact portion owing to the above problem. Moreover, the fastening state of the nuts becomes loose because of external vibration. In this case, the above problem becomes worse.

In order to solve the problem, a method of welding the connection member to the terminals is being proposed. In this case, it is difficult to separate the unit battery from the battery module.

The above information disclosed in this Background section is only for enhancement of understanding of the background of the invention and therefore it may contain information that does not form the prior art that is already known in this country to a person of ordinary skill in the art.

A battery module of the state of the art is disclosed in US 2006/094289.

### SUMMARY OF THE INVENTION

The present invention as disclosed in claim 1 has been made in an effort to provide a battery module having an advantage of low contact resistance.

A battery module according to an exemplary embodiment of the present invention includes a battery module comprising a plurality of unit batteries each having at least one terminal protruding externally from the unit batteries for contacting the unit batteries, at least one terminal base member attached to the at least one terminal providing electrical contact with the at least one terminal, and a connection member to electrically connect a first unit battery with a second unit battery. The connecting member comprises protrusions formed on its surface facing a respective terminal base member for electrically contacting the respective terminal base member.

As described above, according to exemplary embodiments of the present invention, the protrusions formed in the connection member are closely adhered to the base members. Accordingly, an area where the connection member comes into contact with the terminals can be increased, thereby being capable of decreasing contact resistance.

The terminal base members preferably comprise a first nut screwed to the respective terminal or a terminal base integrally formed with the respective terminal and protruding horizontally from the respective terminals.

When the terminal base is integrally formed with the terminal, a contact resistance occurring between the terminal and the first nut can be improved.

Advantageously, the protrusions formed in the connection member are closely adhered to the first nut to form a current passage.

The battery module preferably further comprises means for providing a pressure to the connection member being placed above each connection member to press the connection member and the respective terminal base members together.

The means for providing a pressure to the connection member may comprise a second nut placed above the respective connection member.

The second nut functions to pressurize the connection member toward the first nut in order to improve a contact resistance.

Each unit battery may comprise a casing and a cap plate configured to close the casing on its terminal side.

The connection member preferably has a sheet or plate like shape with at least one hole into which the at least one terminal is inserted.

The protrusions are formed by bending or indenting the connection member. The protrusions are preferably adapted to dig into the surface of the respective terminal base member.

When the protrusions are formed as described above, the protrusions can be closely adhered to the terminal base and an area where the connection member comes into contact with the terminal base can be increased.

The protrusions may be formed in a circumferential direction of the at least one hole. The protrusions are in one embodiment further formed to extend in a radial direction from each of the holes.

Advantageously, the so formed protrusions come uniformly into contact with the terminal base not only in the circumferential direction, but also in the radial direction. Accordingly, current can be transferred through the protrusions more stably.

Advantageously, through their shape the protrusions are closely adhered to the first nuts, i.e. the base members, thereby forming a current passage. Accordingly, the connection member comes into contact with the base members over a larger area.

The protrusions are preferably adapted to be elastically deformed.

Thus, the curvature or shape of the protrusions can be elastically deformed smoothly. Accordingly, the protrusions come into contact with the base members over a larger area.

The protrusions may have a circular ring shape which surrounds the at least one hole into which the at least one terminal is inserted. It may have an arc shape, may have the form of a triangular island, may have the form of a wave in an area around each of the holes or may have a conical shape.

Preferably, the protrusions are formed spaced apart from each other.

The unit batteries are preferably arranged to be series connected by the connection members.

### BRIEF DESCRIPTION OF THE DRAWINGS

FIG. 1 is an exploded perspective view of a battery module according to a first exemplary embodiment of the present invention;
FIG. 2 is a cross-sectional view showing a part of the battery module shown in FIG. 1;
FIGS. 3A and 3B are cross-sectional views illustrating that a protrusion pressurized by nuts is deformed;
FIG. 4 is a cross-sectional view showing part of a battery module according to a second exemplary embodiment of the present invention;
FIG. 5 is a cross-sectional view of a connection member according to a third exemplary embodiment of the present invention;
FIG. 6 is a perspective view of a connection member according to a fourth exemplary embodiment of the present invention; and
FIG. 7 is a partially cut-away perspective view of a connection member according to a fifth exemplary embodiment of the present invention;

### DETAILED DESCRIPTION OF THE EMBODIMENTS

Hereinafter, embodiments of the present invention will be described with reference to the accompanying drawings in order for those skilled in the art to be able to implement it. However, the present invention can be implemented in various ways and are not limited to the following exemplary embodiments. Furthermore, the same reference numbers are used throughout the specification and drawings to refer to the same or like parts

In the following, the connection members 30 and base members may preferably be formed from aluminum or copper, respectively.

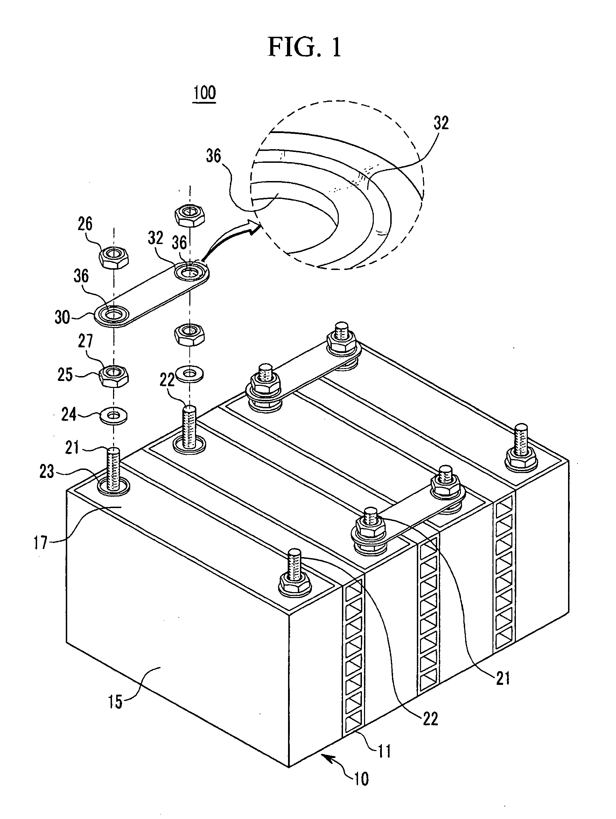

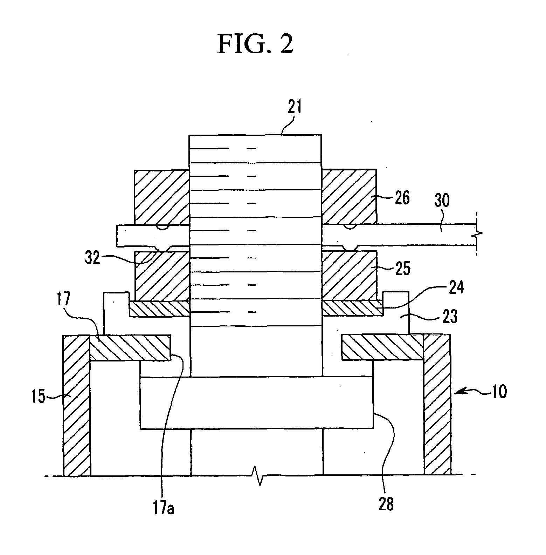

FIG. 1 is an exploded perspective view of a battery module according to a first exemplary embodiment of the present invention, and FIG. 2 is a cross-sectional view showing a part of the battery module shown in FIG. 1.

Referring to FIGS. 1 and 2, the battery module 100 according to the first exemplary embodiment includes a plurality of unit batteries 10 each having a positive terminal 21 and a negative terminal 22, cell barriers 11 each placed between the unit batteries and configured to form a passage of a thermal transfer medium, connection members 30 each configured to electrically connect the terminals 21 and 22 of a neighbor unit battery 10 (the term "terminal" is a concept including both a positive terminal and a negative terminal), and nuts 25 and 26 configured to fasten the connection member 30 to the terminals 21 and 22.

The unit battery 10 according to the present exemplary embodiment includes a casing 15 configured to have a square shape and to close and seal an electrode assembly (not shown) and a cap plate 17 configured to accommodate the casing 15. In the present exemplary embodiment, although the unit battery is illustrated to be the square-shaped battery, the unit battery of the present invention is not limited to the square shape, but may have a cylindrical or other shapes.

Furthermore, the terminals 21 and 22 are placed in the cap plate 17 so that they protrude outside the cap plate 17. Screw mountains engaged with the nuts 25 and 26 are formed on the external circumferential surfaces of the terminals 21 and 22 so that the terminals 21 and 22 can be fixed to the cap plate 17 by the nuts 25 and 26. Here, each of the terminals 21 and 22 may have a rod shape.

Further, a gasket 23 for insulating the cap plate 17 and the terminals 21 and 22 is placed between the cap plate 17 and the terminals 21 and 22.

Holes 17a each having a specific diameter are formed in the cap plate 17 in order to install the terminals 21 and 22 and the gasket 23 in the holes 17a. The gasket 23 is installed in the state where it is inserted into the hole 17a, so the upper portion of the gasket 23 is placed outside the cap plate 17 and the lower portion of the gasket 23 is placed inside the cap plate 17. A flange unit 28 is formed under the terminals 21 and 22 and is configured to support the terminals 21 and 22 within the cap plate 17.

When the first nut 25 placed on the lower side, which belongs to the nuts 25 and 26, is installed on each of the terminals 21 and 22, a washer 24 may be inserted between the gasket 23 and the first nut 25. In this case, the first nut 25 functions as a base member.

In the present exemplary embodiment, the positive terminal 21 and the negative terminal 22 of each of the unit batteries 10, constituting the battery module 100, are arranged to cross the positive terminal 21 and a neighbor unit battery 10 so that the unit batteries 10 can be coupled to each other in series. Thus, the connection member 30 is placed in the positive terminal 21 of the unit battery 10 on one side and the negative terminal 22 of the neighbor unit battery 10 on the other side.

The connection member 30 has a long sheet shape or the shape of a plate, preferably with rounded edges. Holes 36 into which the respective terminals 21 and 22 are inserted are formed on both edge portions of the connection member 30 in the length direction, i.e. one hole 36 is formed on its left end and another hole 36 is formed on its right end. After the first nuts 25 are placed on the terminals 21 and 22, the connection member 30 is installed by inserting the terminals into the respective holes 36. Here, in order to fix the connection member 30, the second nuts 26 are fastened to the respective terminals 21 and 22 over the connection member 30. The second nut 26 functions to pressurize the connection member toward the first nut 25. Accordingly, current generated by the electrode assembly is transferred to the connection member 30 via the positive terminal 21 and the first nut 25.

In this case, protrusions 32 are formed in a surface of the connection member 30, which faces the first nut 25. The protrusions 32 are formed by bending the connection member 30. Accordingly, a portion on a surface of the connection member 30 which faces the second nut 26 and corresponds to the portion, protruding from the connection member 30, is concave. Each of the protrusions 32 is formed in the circumferential direction of each of the terminals 21 and 22. In other words, the protrusions are formed on at least one circumferential line around the terminals 21, 22, preferably on a plurality of circumferential lines. They are formed in the periphery of the terminals 21, 22. In more detail, the protrusion 32 has a circular ring shape which surrounds each of the holes 36 into which the respective terminals 21 and 22 are inserted.

The protrusion 32 may have an arc section, but the shape is not limited to the arc shape. For example, the protrusion 32 may have a variety of sectional shapes, such as a triangle or a quadrangle shape.

If the protrusions 32 are formed in the connection member 30 as in the present exemplary embodiment, the protrusions 32 are closely adhered to the first nuts 25 (i.e., the base members), thereby forming a current passage. Accordingly, the connection member 30 may come into contact with the first nuts 25 over a larger area.

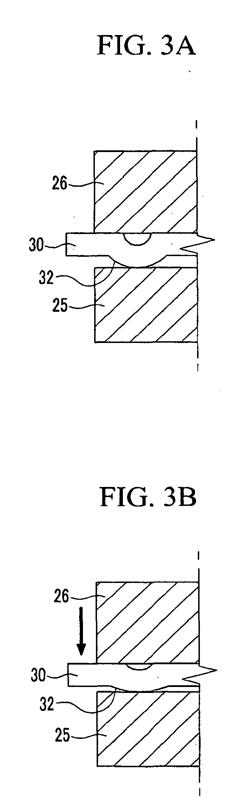

The connection member 30 is bent to thereby form the protrusion 32. Accordingly, when the protrusion 32 is pressed against the first nut 25 by the second nut 26, which functionings as a pressurization member as shown in FIGS. 3A and 3B, the protrusion 32 is spread out, thereby being capable of elastically deforming the curvature of the protrusion 32 smoothly. Accordingly, the protrusion 32 may come into contact with the first nuts 25 over a larger area.

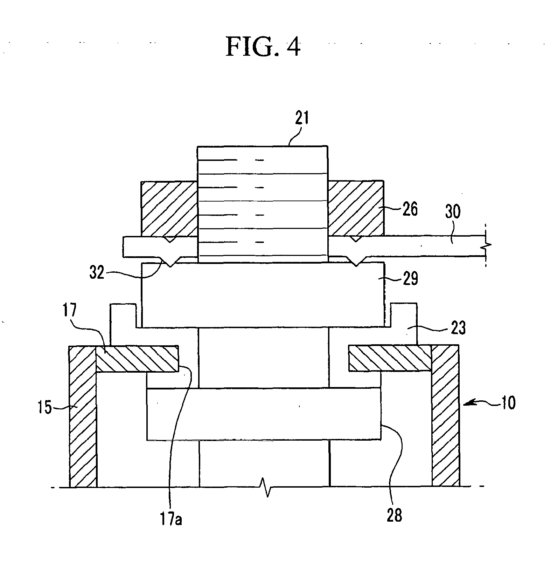

FIG. 4 is a cross-sectional view showing part of a battery module according to a second exemplary embodiment of the present invention. The battery module according to the present exemplary embodiment has the same construction as the battery module according to the first exemplary embodiment except for terminals and the shape of a connection member, and a description of the same construction is omitted.

A flange unit 28 placed under a cap plate 17 and a terminal base 29 placed over the cap plate 17 are formed in a positive terminal 21 according to the present exemplary embodiment. In the present exemplary embodiment, although the positive terminal is described as an example for convenience of description, the negative terminal has the same construction as the positive terminal. The flange unit 28 and the terminal base 29 are integrally formed with the positive terminal 21 and are configured to support the positive terminal 21 for the cap plate 17. The flange unit 28 and the terminal base 29 may be formed by extending a section of the positive terminal 21 in the state where the positive terminal 21 is being inserted into the cap plate 17.

When the terminal base 29 is integrally formed with the positive terminal 21 as described above, contact resistance, occurring between the positive terminal 21 and the first nut in the prior art, can be removed.

Meanwhile, protrusions 32 are formed in a surface of a connection member 30, which faces the terminal base 29. The protrusions 32 are formed by bending the connection member. Further, each of the protrusions 32 may have a triangle which pointedly protrudes toward the terminal base 29.

When the protrusions 32 are formed as described above, the protrusions 32 can dig into the surface of the terminal base 29 and can be then closely adhered thereto. When the protrusions 32 dig into the surface of the terminal base 29 as described above, the protrusions 32 come into surface contact with the terminal base 29. Accordingly, an area where the connection member 30 comes into contact with the terminal base 29 can be increased.

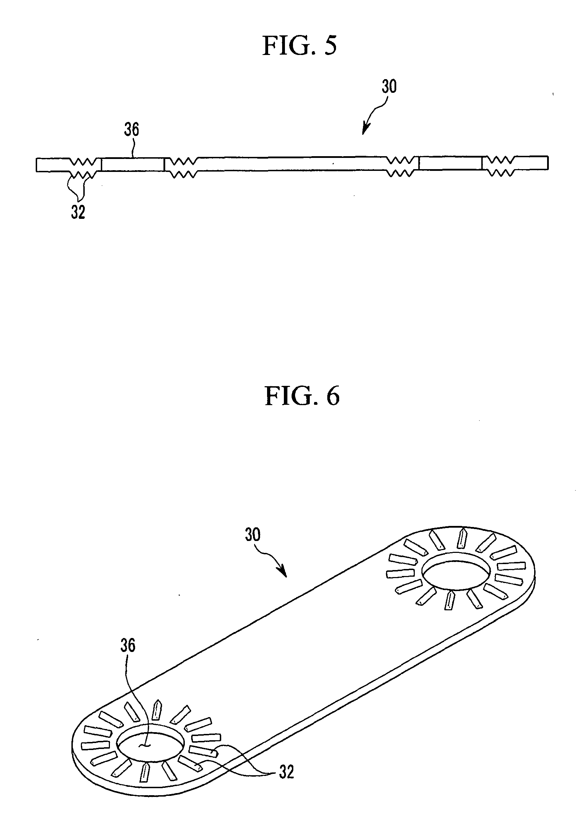

FIG. 5 is a cross-sectional view of a connection member according to a third exemplary embodiment of the present invention.

Referring to FIG. 5, the connection member 30 according to the present exemplary embodiment has a sheet shape. Holes 36 into which the respective terminals 21 and 22 are inserted are formed in the connection member 30 in such a way as to adjoin both edges of the connection member 30 in the length direction thereof.

Protrusions 32 are further formed around each of the holes 36. The protrusions 32 have a structure in which a plurality of protrusions and depressions is consecutive to each other. Accordingly, the protrusions 32 have a waveform section. Further, the protrusions 32 are arranged along the circumference of each of the holes 36, so the plurality of ring-shaped protrusions 32 is arranged around each of the holes 36 in the connection member 30. When the plurality of protrusions 32 is arranged around each of the holes 36 as described above, a larger number of the protrusions 32 can come into contact with the nuts or the base members (i.e., the terminal bases), thereby being capable of reducing contact resistance.

FIG. 6 is a perspective view of a connection member according to a fourth exemplary embodiment of the present invention.

Referring to FIG. 6, a connection member 30 according to the fourth exemplary embodiment has a sheet or plate shape. Holes 36 into which the respective terminals 21 and 22 are inserted are formed in the connection member 30 in such a way as to adjoin both edges of the connection member 30 in the length direction thereof.

A plurality of protrusions 32 is formed on the circumference of each of the holes 36. The protrusions 32 are configured to protrude from a surface of the connection member 30 and are respectively formed to extend in a radial direction from each of the holes 36. The protrusions 32 are formed on lines intersecting the holes 36 in the middle. Thus, they are formed to establish a star like structure. Further, the protrusions 32 are spaced apart from each other at constant intervals and are arranged in the circumferential direction of each of the holes 36. When the protrusions 32 are arranged as described above, the protrusions 32 uniformly come into contact with the nuts or the terminal base (i.e., the base member) not only in the circumferential direction, but also the radius direction. Accordingly, current can be transferred through the protrusions 32 more stably.

In general, current tends to flow along the shortest path. If the protrusions extend only in the circumferential direction and the shortest path is one of portions of the circumferences, the current may be concentrated on the corresponding portion. Accordingly, resistance may increase and heat may occur in the corresponding portion.

When the protrusions 32 extend in the radial direction and the plurality of protrusions 32 is spaced apart from each other along the circumference as in the present exemplary embodiment, however, sufficient contact can be achieved not only in the circumferential direction, but also in the length direction. Accordingly, the concentration of current can be prevented.

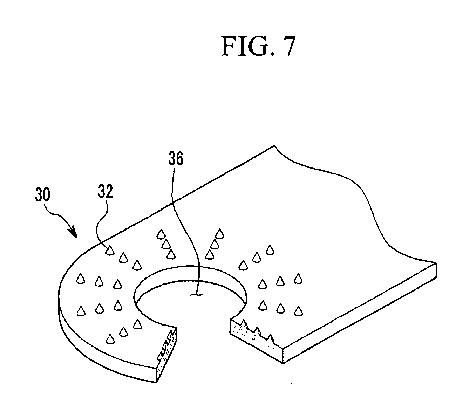

FIG. 7 is a partially cut-away perspective view of a connection member according to a fifth exemplary embodiment of the present invention.

Referring to FIG. 7, the connection member 30 according to the fifth exemplary embodiment has a sheet or plate shape, preferably with round edges, and holes 36 into which the respective terminals 21 and 22 are inserted are formed in the connection member 30. Protrusions 32 are formed in the connection member 30. Each of the protrusions 32 may have a conical shape, and plural sets of the protrusions 32 are arranged with them being spaced apart from each other around each of the holes 36.

In the present exemplary embodiment, it is illustrated that the plurality of protrusions is radially arranged on lines starting close to each of the holes 36 and extending away from the holes 36. The lines intersect each other in the middle of the hole 36. However, the present invention is not limited to the above embodiment, and the protrusions 32 may be arranged in various forms.

When each of the protrusions 32 may have a conical shape as in the present exemplary embodiment, the edges of the conical shapes dig into the nuts or the terminal bases (i.e., the base members). Accordingly, the protrusions 32 may come into contact with the base members more stably.

Each of the protrusions 32 may have a different height depending on tolerance. When the connection member 30 is pressed against the base members by pressurization members such as the nuts, the protrusions 32 having a great height may dig deep into the base members and the protrusions 32 having a small height may less dig into the base members because the edges of the protrusions 32 are pointed. Accordingly, all the protrusions 32 may come into contact with the base members. Consequently, the connection member 30 and the terminals 21 and 22 may come into contact with each other stably.
While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A battery module (100) comprising:
a plurality of unit batteries (10) each having at least one terminal (21, 22) protruding externally from the unit batteries (10) for contacting the unit batteries (10),
at least one terminal base member (25, 29) attached to the at least one terminal (21, 22) providing electrical contact with the at least one terminal (21, 22),
a connection member (30) to electrically connect a first unit battery (10) with a second unit battery (10),
**characterized in that**
the connecting member (30) comprises:
protrusions (32) formed on its surface facing a respective flat top surface of the terminal base member (25, 29) for electrically contacting the respective terminal base member (25, 29), wherein the protrusions (32) are formed by bending or indenting the connection member (30); and
concave portions formed in its surface opposite to the surface where the protrusion (32) are formed and at corresponding locations of the protrusions (32).

2. Battery module (100) of claim 1, wherein the terminal base members (25,29) comprise:
a first nut (25) screwed to the respective terminal (21, 22); or
a terminal base (29) integrally formed with the respective terminal (21, 22) and protruding horizontally from the respective terminals (21, 22).

3. Battery module (100) of claim 1 or 2, further comprising means for providing a pressure to the connection member (30) being placed above each connection member (30) to press the connection member (30) and the respective terminal base members (25, 29) together.

4. Battery module (100) of claim 3, wherein the means for providing a pressure to the connection member (30) comprises a second nut (26) placed above the respective connection member (30).

5. Battery module (100) of any of the previous claims, wherein each unit battery (10) comprises a casing (15) and a cap plate (17) configured to close the casing (15) on its terminal side.

6. Battery module (100) of any of the previous claims, wherein the connection member (30) has a sheet shape with at least one hole (36) into which the at least one terminal (21, 22) is inserted.

7. Battery module (100) of any of the previous claims, wherein the protrusions (32) are adapted to be elastically deformed.

8. Battery module (100) of any of the previous claims, wherein the protrusions (32) are adapted to dig into the surface of the respective terminal base member (25, 29).

9. Battery module (100) of any of the previous claims, wherein the protrusions (32) are formed in a circumferential direction of the at least one hole (36).

10. Battery module (100) of any of the previous claims, wherein the protrusions (32) are formed to extend in a radial direction from each of the holes (36).

11. Battery module (100) of any of the previous claims, wherein the protrusions (32) have a circular ring shape (32) which surrounds the at least one hole (36) into which the at least one terminal (21, 22) is inserted.

12. Battery module (100) of any of the previous claims, wherein the protrusions (32) have an arc shape; and/or have the form of a triangular island; and/or have the form of a wave (32) in an area around each of the holes (36); and/or have a conical shape (32).

13. Battery module (100) of any of the previous claims, wherein the protrusions (32) are formed spaced apart from each other.

14. Battery module (100) of any of the previous claims, wherein the unit batteries (10) are arranged to be series connected by the connection members (30).

## Patentansprüche

1. Batteriemodul (100), umfassend:
eine Vielzahl von Batterieeinheiten (10), die jeweils mindestens eine von den Batterieeinheiten (10) außen vorstehende Klemme (21, 22) zum Kontaktieren der Batterieeinheiten (10) aufweisen,
mindestens ein an der mindestens einen Klemme (21, 22) befestigtes Klemmenbasiselement (25, 29), das einen elektrischen Kontakt mit der mindestens einen Klemme (21, 22) bereitstellt,
ein Verbindungselement (30) zum elektrischen Verbinden einer ersten Batterieeinheit (10) mit einer zweiten Batterieeinheit (10),
**dadurch gekennzeichnet, dass**
das Verbindungselement (30) umfasst:
Vorsprünge (32), die an dessen einer entsprechenden flachen Oberfläche des Klemmenbasiselements (25, 29) zugewandten Fläche zum elektrischen Kontaktieren des jeweiligen Klemmenbasiselements (25, 29) ausgebildet sind, wobei die Vorsprünge (32) durch Biegen oder Eindrücken des Verbindungselements (30) gebildet sind; und
konkave Abschnitte, die in dessen Fläche, welche der Fläche, an der die Vorsprünge (32) ausgebildet sind, gegenüberliegt, an entsprechenden Stellen der Vorsprünge (32) ausgebildet sind.

2. Batteriemodul (100) nach Anspruch 1, wobei die Klemmenbasiselemente (25, 29) umfassen:
eine auf die jeweilige Klemme (21, 22) geschraubte erste Mutter (25); oder
eine Klemmenbasis (29), die einstückig mit der jeweiligen Klemme (21, 22) ausgebildet ist und horizontal von den jeweiligen Klemmen (21, 22) absteht.

3. Batteriemodul (100) nach Anspruch 1 oder 2, ferner umfassend ein über jedem Verbindungselement (30) angeordnetes Mittel zum Aufbringen eines Drucks auf das Verbindungselement (30), um das Verbindungselement (30) und die jeweiligen Klemmenbasiselemente (25, 29) zusammenzudrücken.

4. Batteriemodul (100) nach Anspruch 3, wobei das Mittel zum Aufbringen eines Drucks auf das Verbindungselement (30) eine zweite Mutter (26) umfasst, die über dem jeweiligen Verbindungselement (30) angeordnet ist.

5. Batteriemodul (100) nach einem der vorstehenden Ansprüche, wobei jede Batterieeinheit (10) ein Gehäuse (15) und eine Abdeckplatte (17) umfasst, die zum Verschließen des Gehäuses (15) an dessen Klemmenseite ausgeführt ist.

6. Batteriemodul (100) nach einem der vorstehenden Ansprüche, wobei das Verbindungsglied (30) eine Plattenform aufweist, mit mindestens einem Loch (36), in welches die mindestens eine Klemme (21, 22) eingesetzt ist.

7. Batteriemodul (100) nach einem der vorstehenden Ansprüche, wobei die Vorsprünge (32) elastisch verformbar ausgeführt sind.

8. Batteriemodul (100) nach einem der vorstehenden Ansprüche, wobei die Vorsprünge so ausgeführt sind, dass sie sich in die Oberfläche des jeweiligen Klemmenbasiselements (25, 29) eingraben.

9. Batteriemodul (100) nach einem der vorstehenden Ansprüche, wobei die Vorsprünge (32) in Umfangsrichtung des mindestens einen Lochs (36) ausgebildet sind.

10. Batteriemodul (100) nach einem der vorstehenden Ansprüche, wobei die Vorsprünge (32) so ausgebildet sind, dass sie sich in radialer Richtung von jedem der Löcher (36) erstrecken.

11. Batteriemodul (100) nach einem der vorstehenden Ansprüche, wobei die Vorsprünge (32) eine Kreisringform (32) aufweisen, die das mindestens eine Loch (36), in welches die mindestens eine Klemme (21, 22) eingesetzt ist, umgibt.

12. Batteriemodul (100) nach einem der vorstehenden Ansprüche, wobei die Vorsprünge (32) eine Bogenform aufweisen; und/oder die Form einer dreieckigen Insel aufweisen; und/oder die Form einer Welle (32) in einem Bereich um jedes der Löcher (36) aufweisen; und/oder eine konische Form (32) aufweisen.

13. Batteriemodul (100) nach einem der vorstehenden Ansprüche, wobei die Vorsprünge (32) voneinander beabstandet ausgebildet sind.

14. Batteriemodul (100) nach einem der vorstehenden Ansprüche, wobei die Batterieeinheiten(10) durch die Verbindungselemente (30) in Reihe geschaltet angeordnet sind.

## Revendications

1. Module de batterie (100) comprenant :
une pluralité de batteries unitaires (10) ayant chacune au moins une borne (21, 22) faisant saillie vers l'extérieur à partir des batteries unitaires (10) pour mettre en contact les batteries unitaires (10),
au moins un élément de base de borne (25, 29) fixé à l'au moins une borne (21, 22) assurant un contact électrique avec l'au moins une borne (21, 22),
un élément de connexion (30) pour connecter électriquement une première batterie unitaire (10) avec une deuxième batterie unitaire (10),
**caractérisé en ce que** :
l'élément de connexion (30) comprend :
des protubérances (32) formées sur sa surface faisant face à une surface supérieure plane respective de l'élément de base de borne (25, 29) pour contacter électriquement l'élément de base de borne respective (25, 29), les protubérances (32) étant formées par pliage ou fonçage de l'élément de connexion (30) ; et
des parties concaves formées dans sa surface opposée à la surface où les protubérances (32) sont formées et à des emplacements correspondants des protubérances (32).

2. Module de batterie (100) de la revendication 1, dans lequel les éléments de base de borne (25, 29) comprennent :
un premier écrou (25) vissé à la borne respective (21, 22) ; ou
une base de borne (29) formée solidairement avec la borne respective (21, 22) et faisant saillie horizontalement à partir des bornes respectives (21, 22).

3. Module de batterie (100) de la revendication 1 ou 2, comprenant en outre un moyen, destiné à fournir une pression à l'élément de connexion (30), étant placé au-dessus de chaque élément de connexion (30) pour presser l'élément de connexion (30) et les éléments de base de borne respective (25, 29) ensemble.

4. Module de batterie (100) de la revendication 3, dans lequel le moyen destiné à fournir une pression à l'élément de connexion (30) comprend un deuxième écrou (26) placé au-dessus de l'élément de connexion respectif (30).

5. Module de batterie (100) de l'une des revendications précédentes, dans lequel chaque batterie unitaire (10) comprend un boîtier (15) et une plaque de couvercle (17) configurée pour fermer le boîtier (15) sur son côté de borne.

6. Module de batterie (100) de l'une des revendications précédentes, dans lequel l'élément de connexion (30) a une forme de feuille avec au moins un trou (36) dans lequel l'au moins une borne (21, 22) est insérée.

7. Module de batterie (100) de l'une des revendications précédentes, dans lequel les protubérances (32) sont conçues pour être élastiquement déformées.

8. Module de batterie (100) de l'une des revendications précédentes, dans lequel les protubérances (32) sont conçues pour s'enfoncer dans la surface de l'élément de base de borne respectif (25, 29).

9. Module de batterie (100) de l'une des revendications précédentes, dans lequel les protubérances (32) sont formées dans une direction circonférentielle de l'au moins un trou (36).

10. Module de batterie (100) de l'une des revendications précédentes, dans lequel les protubérances (32) sont formées de manière à s'étendre dans une direction radiale à partir de chacun des trous (36).

11. Module de batterie (100) de l'une des revendications précédentes, dans lequel les protubérances (32) ont une forme d'anneau circulaire (32) qui entoure l'au moins un trou (36) dans lequel l'au moins une borne (21, 22) est insérée.

12. Module de batterie (100) de l'une des revendications précédentes, dans lequel les protubérances (32) ont une forme d'arc ; et/ou ont la forme d'un îlot triangulaire ; et/ou ont la forme d'une onde (32) dans une zone autour de chacun des trous (36) ; et/ou ont une forme conique (32).

13. Module de batterie (100) de l'une des revendications précédentes, dans lequel les protubérances (32) sont formées de manière à être écartées les unes des autres.

14. Module de batterie (100) de l'une des revendications précédentes, dans lequel les batteries unitaires (10) sont agencées de manière à être connectées en série par les éléments de connexion (30).
